(19) Europäisches Patentamt / European Patent Office / Office européen des brevets

(11) **EP 3 922 988 B1**

(12) **EUROPEAN PATENT SPECIFICATION**

(45) Date of publication and mention
of the grant of the patent:
**26.06.2024 Bulletin 2024/26**

(21) Application number: **20770602.9**

(22) Date of filing: **09.03.2020**

(51) International Patent Classification (IPC):
**G01N 29/11** *(2006.01)*  **G01N 29/275** *(2006.01)*
**G01N 29/50** *(2006.01)*  **G01N 29/04** *(2006.01)*

(52) Cooperative Patent Classification (CPC):
**G01N 29/043; G01N 29/11; G01N 29/275;
G01N 29/50;** G01N 2291/0234; G01N 2291/0289;
G01N 2291/044; G01N 2291/2626

(86) International application number:
**PCT/JP2020/010078**

(87) International publication number:
**WO 2020/184521 (17.09.2020 Gazette 2020/38)**

(54) **ULTRASONIC FLAW DETECTION METHOD, ULTRASONIC FLAW DETECTION DEVICE, FACILITY FOR MANUFACTURING STEEL MATERIAL, METHOD FOR MANUFACTURING STEEL MATERIAL, AND STEEL MATERIAL QUALITY CONTROL METHOD**

ULTRASCHALLFEHLERDETEKTIONSVERFAHREN, ULTRASCHALLFEHLERDETEKTIONSVORRICHTUNG, ANLAGE ZUR HERSTELLUNG VON STAHLMATERIAL, VERFAHREN ZUR HERSTELLUNG VON STAHLMATERIAL UND VERFAHREN ZUR QUALITÄTSKONTROLLE VON STAHLMATERIAL

PROCÉDÉ DE DÉTECTION DE DÉFAUTS PAR ULTRASONS, DISPOSITIF DE DÉTECTION DE DÉFAUTS PAR ULTRASONS, INSTALLATION POUR LA FABRICATION DE MATÉRIAU EN ACIER, PROCÉDÉ DE FABRICATION DE MATÉRIAU EN ACIER, ET PROCÉDÉ DE CONTRÔLE QUALITÉ DE MATÉRIAU EN ACIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.03.2019 JP 2019046392**

(43) Date of publication of application:
**15.12.2021 Bulletin 2021/50**

(73) Proprietor: **JFE Steel Corporation
Tokyo 100-0011 (JP)**

(72) Inventors:
• **TERADA, Kazuki
Tokyo 100-0011 (JP)**
• **MATSUI, Yutaka
Tokyo 100-0011 (JP)**
• **MATSUMOTO, Minoru
Tokyo 100-0011 (JP)**
• **OHTANI, Yoshinori
Tokyo 100-0011 (JP)**

(74) Representative: **Haseltine Lake Kempner LLP
Bürkleinstrasse 10
80538 München (DE)**

(56) References cited:
**WO-A1-2015/001624    JP-A- H05 172 789
JP-A- S58 106 454    JP-A- S58 106 454
JP-A- 2015 021 738    JP-A- 2015 021 738
JP-U- S6 128 051**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field

The present invention relates to an ultrasonic flaw inspection method, an ultrasonic flaw inspection device, a manufacturing facility for steel materials, a manufacturing method for steel materials, and a quality management method for steel materials.

Background

A flaw in an inner part of a round bar body may become a starting point of a crack in manufacturing a mechanical component made of the round bar body as a material, and deteriorates strength or service life of the mechanical component after the manufacturing. Thus, ultrasonic flaw inspection has been performed on the inner part of the round bar body to evaluate an internal flaw in the related art. Conventional ultrasonic flaw inspection devices for a round bar body uses a method of relatively moving a single normal probe and a single angle probe in a circumferential direction and an axial direction with respect to the round bar body, or a method of performing flaw inspection for all cross sections by switching a direction of an ultrasonic beam with an array probe.

In angle beam flaw inspection with a single probe or an array probe, an internal inclusion or a crack in the vicinity of a surface layer of steel materials are mainly detected. In a case of a crack in the vicinity of the surface layer, the crack often develops from the surface layer to the inner part, and has reflection directivity (hereinafter, referred to as a "surface layer flaw"). In a case in which such a surface layer flaw is detected, the flaw is removed when the flaw is in a range capable of being cut (for example, up to a depth of 2 mm from the surface layer). If the flaw is out of the range capable of being cut, a rating of a product is lowered, or the product is processed as an internally defective product.

As a method of determining whether the surface layer flaw is in the range capable of being cut, there is known a method of performing determination by combining normal flaw inspection and angle flaw inspection, for example. When an inner side of the range capable of being cut is set as a detection gate for normal flaw inspection, a flaw that is not detected by normal flaw inspection and detected by angle flaw inspection is assumed to be present in the range capable of being cut.

However, the flaw as a target of the determination method described above is basically a flaw without directivity, which is a non-directive flaw having a circular cross section within a flaw inspection cross section. A surface crack developing from the surface layer cannot be detected by normal flaw inspection, so that the surface crack developing from the surface layer is determined to be in the range capable of being cut even if the surface crack develops to the outside of the range capable of being cut. In this case, a steel material the surface layer of which is cut may be shipped in a state of including the surface crack, and a large crack starting from the surface layer flaw may be caused at a step of further rolling and forging the shipped steel material. Thus, there is a demand for a flaw inspection method for deriving a depth of a surface layer crack from flaw inspection data to perform acceptance/rejection determination.

As a method of deriving a depth of a surface flaw using an ultrasonic probe, there is known a method of deriving the depth based on a difference in a path length and a position of the ultrasonic probe where strengths of a corner reflection wave from the surface layer flaw and a diffraction wave from an end part become the highest. However, the strength of the diffraction wave from the end part is considerably lower than that of the corner reflection wave, and the path length to an appearance point thereof is shorter, so that there is the possibility that the diffraction wave and the reflection wave cannot be separated from each other. Under a high-noise environment, there is the possibility that sufficient S/N cannot be obtained, and the diffraction wave cannot be detected.

For example, Patent Literature 1 discloses a method of obtaining a length of a surface layer flaw based on a time difference between a corner reflection wave and an end diffraction wave using two ultrasonic probes. Patent Literature 2 discloses a method of obtaining a flaw depth by performing flaw inspection at a plurality of frequencies. Patent Literature 3 discloses a method of discriminating between a surface layer flaw and an internal inclusion using a characteristic of a flaw echo. Patent Literature 4 discloses obtaining an intensity distribution in which the horizontal axis shows scan positions of transversal wave beams in a circumferential direction of a round-bar steel material and the vertical axis shows a time change in the reflected wave intensity of the ultrasonic wave at each scan position. Discrimination between a surface flaw occurring in the round-bar steel material and an internal defect immediately below the surface is performed based on the size of the area of a region in which the reflected wave intensity in the intensity distribution is a certain value or more. Patent Literature 5 discloses a small-sized, portable equipment intended for detecting the position and shape of a fault in a body to be inspected by using ultrasonic wave oscillators which have the same beam area and different radiation angles.

Citation List

Patent Literature

Patent Literature 1: Japanese Patent Application Laid-open No. 2013-088240
Patent Literature 2: Japanese Patent Application Laid-open No. 2015-114127
Patent Literature 3: Japanese Patent Application Laid-open No. 2000-241396
Patent Literature 4: Japanese Patent Application Laid-open No. 2015-021738
Patent Literature 5: Japanese Patent Application Laid-open No. S58 106454

Summary

Technical Problem

In the method disclosed in Patent Literature 1, discrimination is enabled by receiving the corner reflection wave and the end diffraction wave by different ultrasonic probes, but there is the problem that a minute flaw cannot be detected because the end diffraction wave is minute.

In the method disclosed in Patent Literature 2, the flaw depth can be roughly discriminated by using two or more frequencies, but a flaw inspection frequency is required to be increased to obtain the flaw depth using the ultrasonic flaw inspection method according to the present embodiment with high resolution and in a wide range. Thus, a problem is caused such that cost is increased and a maintenance load is increased because a flaw inspection time is increased or a scale of the facility is enlarged.

The method disclosed in Patent Literature 3 describes that the surface layer flaw and the internal inclusion are discriminated from each other using the characteristic of the flaw echo, but does not describe derivation of the depth of the surface layer flaw or an acceptance/rejection determination method.

In typical ultrasonic flaw inspection, a certain threshold is set to determine acceptance/rejection irrespective of a shape of the flaw. However, essentially, reflectivity and directivity are different between a directive flaw and a non-directive flaw, so that a harmful flaw and a harmless flaw cannot be discriminated from each other only by performing determination using the same threshold. In angle flaw inspection, a flaw is detected as a directive flaw, but it is not possible to perform appropriate acceptance/rejection determination or removal of the flaw by surface cutting unless the length of the surface flaw is estimated.

The present invention has been made in view of the problems described above, and aims to provide an ultrasonic flaw inspection method and an ultrasonic flaw inspection device that can estimate a shape of a flaw in an inner part of an inspection material with high accuracy. The present invention also aims to provide a manufacturing facility for steel materials and a manufacturing method for steel materials that can manufacture steel materials with a high yield. Additionally, the present invention also aims to provide a quality management method for steel materials that can provide high-quality steel materials.

Solution to Problem

The summary of the present invention is as follows.

(1) An ultrasonic flaw inspection method is defined in claim 1.
(2) A preferred feature of the ultrasonic flaw inspection method is defined in claim 2.
(3) An ultrasonic flaw inspection device is defined in claim 3.
(4) A manufacturing facility for steel materials is defined in claim 4.
(5) A manufacturing method for steel materials is defined in claim 5.
(6) A quality management method for steel materials is defined in claim 6.

Advantageous Effects of Invention

With the ultrasonic flaw inspection method and the ultrasonic flaw inspection device according to the present invention, the shape of the flaw present in the inspection material can be estimated by using an expected sound pressure calculated from the directivity of the ultrasonic probe. Due to this, a range of the flaw present in the inner part of the inspection material is clarified, so that a higher-quality product can be manufactured, and the yield can be improved. With the manufacturing facility for steel materials and the manufacturing method for steel materials according to the present invention, steel materials can be manufactured with a high yield. Furthermore, with the quality management method for steel materials according to the present invention, high-quality steel materials can be provided.

Brief Description of Drawings

FIG. 1 is a diagram schematically illustrating a configuration of an ultrasonic flaw inspection device according to an embodiment of the present invention.
FIG. 2 is a diagram schematically illustrating a signal processing method in an ultrasonic flaw inspection method according to the embodiment of the present invention.
FIG. 3 is a diagram schematically illustrating a propagation path of a first reflection model of a non-directive flaw.
FIG. 4 is a diagram schematically illustrating a propagation path of a second reflection model of a non-directive flaw.
FIG. 5 is a diagram schematically illustrating a propagation path of a third reflection model of a non-directive flaw.
FIG. 6 is a diagram schematically illustrating a propagation path of a fourth reflection model of a non-directive flaw.
FIG. 7 is a diagram schematically illustrating a propagation path of a first reflection model of a directive flaw.
FIG. 8 is a diagram schematically illustrating a propagation path of a second reflection model of a directive flaw.
FIG. 9 is a diagram schematically illustrating a propagation path of a third reflection model of a directive flaw.
FIG. 10 is a diagram schematically illustrating a propagation path of a fourth reflection model of a directive flaw.
FIG. 11 is a diagram schematically illustrating a positional relation between an ultrasonic probe and an apparent ultrasonic probe.
FIG. 12 is a diagram schematically illustrating a calculation method for an expected sound pressure in the propagation path of the first reflection model of the non-directive flaw.
FIG. 13 is a diagram schematically illustrating a calculation method for an expected sound pressure in propagation paths of the second to the fourth reflection models of the non-directive flaw.
FIG. 14 is a diagram schematically illustrating a calculation method for an expected sound pressure in the propagation path of the first reflection model of the directive flaw.
FIG. 15 is a diagram schematically illustrating a calculation method for an expected sound pressure in propagation paths of the second to the fourth reflection models of the directive flaw.
FIG. 16 is a diagram illustrating an example of imaging a flaw signal group at the time of receiving a reflection signal from the non-directive flaw while changing a position of the ultrasonic probe.
FIG. 17 is a diagram illustrating an example of imaging a flaw signal group at the time of receiving a reflection signal from the directive flaw while changing the position of the ultrasonic probe.
FIG. 18 is a diagram illustrating an example of setting a flaw image region.
FIG. 19 is a diagram illustrating an example of a calculation result of an expected sound pressure that is obtained when a specific flaw shape is assumed.
FIG. 20 is a diagram illustrating an example of a received sound pressure that is obtained from actual flaw signal data and determined to be a flaw.

Description of Embodiments

Ultrasonic flaw inspection device

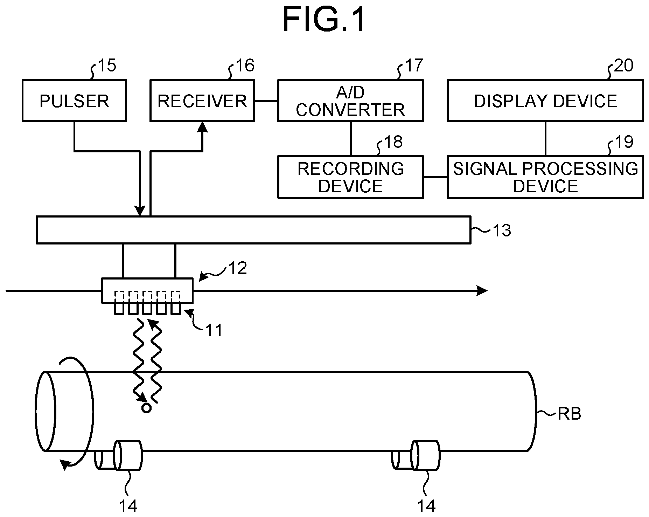

The following describes a configuration and operation of an ultrasonic flaw inspection device according to an embodiment of the present invention in detail with reference to the drawings.
The following describes the configuration of the ultrasonic flaw inspection device according to the embodiment of the present invention with reference to FIG. 1. An ultrasonic flaw inspection device 1 is a device that performs ultrasonic flaw inspection on an inspection object by an ultrasonic flaw inspection method using an immersion flaw inspection method (hereinafter, referred to as an immersion method). The ultrasonic flaw inspection device 1 detects a flaw present in a round bar body RB that is manufactured by rolling a cast steel billet, for example, by using ultrasonic waves. A presence position of the flaw is a surface layer and an inner part of the round bar body RB, but they are collectively referred to as an "inner part" including the surface layer hereinafter.
The ultrasonic flaw inspection device 1 according to the present embodiment includes a plurality of ultrasonic probes 11, a probe head 12, a stand 13, a rotational driving device 14, a pulser 15, a receiver 16, an A/D converter 17, a recording device 18, a signal processing device 19, and a display device 20 as principal constituent elements.
The ultrasonic probe 11 is disposed outside an inspection material (for example, the round bar body RB), transmits ultrasonic waves while changing a positional relation with respect to the inspection material, and receives a flaw signal. In the ultrasonic flaw inspection device 1 illustrated in FIG. 1, the ultrasonic probes 11, the receiver 16, the A/D converter 17, and the recording device 18 correspond to a reception unit.

Additionally, the ultrasonic flaw inspection device 1 according to the present embodiment includes an extraction unit that extracts, from reflection signals received by the ultrasonic probes 11, a flaw signal as reflection from a flaw in the inspection material. The ultrasonic flaw inspection device 1 also includes a flaw type determination unit that determines a flaw type based on a characteristic of the flaw signal received by the ultrasonic probe 11. The ultrasonic flaw inspection device 1 further includes an expected sound pressure calculation unit that previously calculates an expected sound pressure as a strength of a flaw signal from a virtual flaw that is expected considering ultrasonic directivity of the ultrasonic probe 11.

The ultrasonic flaw inspection device 1 also includes a flaw shape estimation unit that estimates the shape of the flaw (hereinafter, referred to as a "flaw shape") based on the expected sound pressure that is expected from the ultrasonic directivity of the ultrasonic probe 11 and previously calculated by the expected sound pressure calculation unit, and a received sound pressure obtained from the strength of the flaw signal extracted by the extraction unit in a positional relation between the inspection material and the ultrasonic probes 11. The ultrasonic flaw inspection device 1 also includes a determination unit that performs acceptance/rejection determination for the inspection material based on the estimated flaw shape, and determines a cutting amount of the inspection material. In the ultrasonic flaw inspection device 1 illustrated in FIG. 1, the signal processing device 19 corresponds to the extraction unit, the flaw type determination unit, the expected sound pressure calculation unit, the flaw shape estimation unit, and the determination unit. In the present embodiment, the received sound pressure represents a maximum value of signal amplitude within a set time range obtained by setting the time range for the flaw signal received by the ultrasonic probe 11.

One or more ultrasonic probes 11 are disposed at a position that is separated from the round bar body RB by a predetermined distance via water as a medium for the immersion method. The ultrasonic probe 11 is excited by a pulse signal output from the pulser 15 during flaw inspection by ultrasonic waves, and transmits an ultrasonic signal to the round bar body RB. The ultrasonic signal after propagating through the inner part of the round bar body RB to be reflected (hereinafter, referred to as a "reflection signal") is received by the receiver 16 via the ultrasonic probe 11.

The probe head 12 includes the ultrasonic probes 11, and is configured to be able to move on the stand 13 that is disposed above the round bar body RB. Due to this, the ultrasonic probe 11 is enabled to scan the round bar body RB in an axial direction thereof. The round bar body RB is rotated by the rotational driving device 14 in a circumferential direction indicated by an arrow while the probe head 12 is caused to perform scanning, and the receiver 16 receives a flaw signal. As a result, the entire volume of the round bar body RB can be subjected to ultrasonic flaw inspection. That is, in the ultrasonic flaw inspection device 1, the ultrasonic probes 11 can transmit and receive one or a plurality of ultrasonic waves while the position of the ultrasonic probe 11 with respect to the round bar body RB is changed.

A rotational speed of the rotational driving device 14 and a scanning speed of the probe head 12 are set so that the entire volume of the round bar body RB is sufficiently subjected to ultrasonic flaw inspection. Alternatively, ultrasonic flaw inspection may be performed on the entire volume of the round bar body RB while rotating the probe head 12 about the round bar body RB without rotating the round bar body RB. In the present embodiment, "the position of the ultrasonic probe 11 with respect to the inspection object (that is, the round bar body RB) is changed" means that a certain one of the ultrasonic probes 11 moves relatively to the inspection object. It also means that, in a case in which there are a plurality of the ultrasonic probes 11, the probe head 12 is fixed, and reception of the flaw signal moves among the ultrasonic probes 11.

The reflection signal in an analog form received by the receiver 16 is converted into digital data by the A/D converter 17 while being synchronized with the pulse signal output from the pulser 15, and stored in the recording device 18. Due to this, the reflection signals of the entire volume of the round bar body RB is stored in the recording device 18. The stored reflection signals are subjected to signal processing to be a flaw signal and the like by the signal processing device 19, and a signal processing result is displayed on the display device 20. The signal processing may be successively performed on the reflection signals that are stored during flaw inspection by ultrasonic waves, or may be performed after all of the reflection signals are stored. The signal processing may also be selectively performed on part of data, not only on the entire data to be stored.

The signal processing device 19 extracts a flaw portion from the stored reflection signals, and stores reflection from a flaw in the inspection material as a flaw signal in the recording device 18. The signal processing device 19 also determines a flaw type as a piece of the signal processing for the stored flaw signal. Additionally, the signal processing device 19 estimates a flaw shape as a piece of the signal processing for the stored flaw signal. In determining the flaw type, signal processing such as aperture synthesis may be performed in some cases. The signal processing device 19 also previously calculates a received sound pressure (hereinafter, referred to as an "expected sound pressure") as the strength of the flaw signal from the virtual flaw that is expected from the directivity of the ultrasonic probe 11. The flaw shape is then estimated based on the expected sound pressure that is previously calculated, and the received sound pressure of the flaw signal that is actually measured. As the flaw signal used for estimating the flaw shape, used is not only unprocessed data of the stored flaw signal but also data after signal processing that is subjected to signal processing such as aperture synthesis or frequency filtering.

That is, the signal processing device 19 includes the extraction unit that extracts, from the reflection signals received by the ultrasonic probe 11, the flaw signal as reflection from the flaw in the inspection material. The signal processing device 19 also includes the flaw type determination unit that determines the flaw type based on the characteristic of the flaw signal received by the ultrasonic probe 11. The signal processing device 19 also includes the expected sound pressure calculation unit that previously calculates the received sound pressure of the flaw signal from the virtual flaw that is expected considering the ultrasonic directivity of the ultrasonic probe 11. The signal processing device 19 also includes the flaw shape estimation unit that estimates the flaw shape based on the received sound pressure in each positional relation received by the ultrasonic probe 11 and the expected sound pressure that is previously calculated. The signal processing device 19 also includes the determination unit that performs acceptance/rejection determination and determination of a required cutting amount for the inspection material based on the estimated flaw shape.

Ultrasonic flaw inspection method

Next, the following describes the ultrasonic flaw inspection method according to the present embodiment. The ultrasonic flaw inspection method according to the present embodiment includes four steps including (I) reception step, (II) extraction step, (III) estimation step, and (IV) determination step. In the ultrasonic flaw inspection method according to the present embodiment, (II) extraction step is performed following (I) reception step, (III) estimation step is performed following (II) extraction step, and (IV) determination step is performed following (III) estimation step.

At the reception step I, the ultrasonic probes 11 receive one or a plurality of the reflection signals while the positional relation between the inspection material (for example, the round bar body RB) and the ultrasonic probe 11 is changed. In the present embodiment, the inspection material is the round bar body RB, so that exemplified is the angle flaw inspection described above. At the reception step I, a known reception method for a flaw signal using the ultrasonic probe 11 can be used. By way of example, the method can be implemented by operation of the ultrasonic probe 11, the receiver 16, the A/D converter 17, and the recording device 18 described above.

At the extraction step II, the ultrasonic signal reflected from the flaw present in the inspection material is extracted as the flaw signal from one or a plurality of the reflection signals received by the ultrasonic probes 11 at the reception step I. The extracted flaw signal is stored in the recording device 18. Extraction of the flaw signal from the actually received reflection signals can be implemented by operation of the signal processing device 19.

At the estimation step III, whether the flaw is a directive flaw or a non-directive flaw is determined based on the characteristic of the flaw signal extracted at the extraction step II. In each positional relation between the inspection material and the ultrasonic probe 11, the flaw shape is estimated by comparing the expected sound pressure previously calculated from the ultrasonic directivity of the ultrasonic probe 11 with the received sound pressure of the flaw signal actually received by the ultrasonic probe 11. A calculation method for the expected sound pressure used for estimating the flaw shape is the most important technique of the present invention. Thus, the calculation method for the expected sound pressure will be described later in detail.

At the determination step IV, for the flaw signal extracted from the reflection signals at the extraction step II, acceptance/rejection and/or a required cutting amount is determined for the inspection material based on the flaw shape estimated at the estimation step III.

With the ultrasonic flaw inspection method according to the present embodiment including the steps as described above, the flaw shape and a presence depth at which the flaw is present (hereinafter, simply referred to as a "depth") can be accurately estimated. Due to this, acceptance/rejection determination for the inspection material can be performed, and/or a surface cutting amount for a case in which the inspection material is rejected can be determined. As a result, quality and a yield of a product can be improved.

(I) Reception step

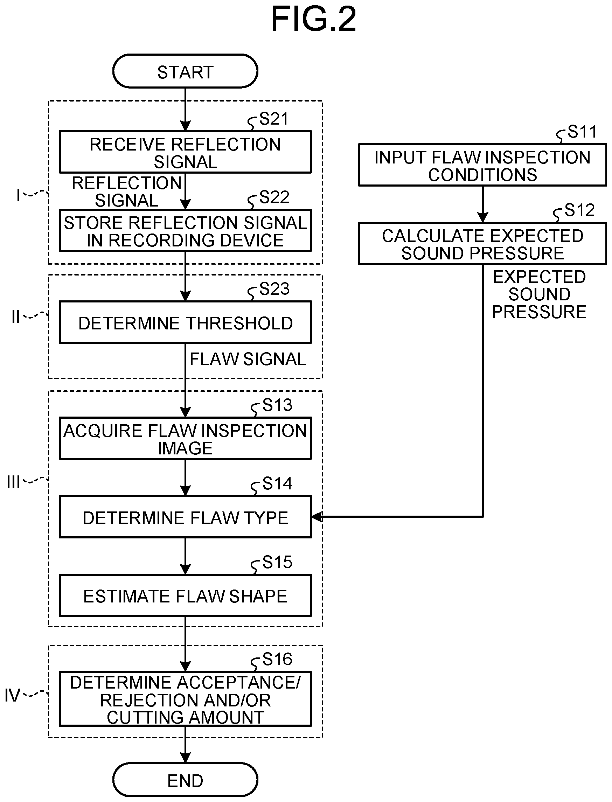

The following describes operations of the signal processing device 19 and the recording device 18 at the time of receiving the flaw signal at the reception step I of the ultrasonic flaw inspection method according to the embodiment of the present invention with reference to FIG. 2. At the reception step I, first, the reception unit receives the reflection signal from the inside of the round bar body RB (Step S21). Next, the received reflection signal is stored in the recording device 18 (Step S22).

(II) Extraction step

At the extraction step II, the signal processing device 19 performs threshold determination, using a threshold determined in advance, for the reflection signals that are stored in the recording device 18 at the reception step I (Step S23). The signal processing device 19 determines that there is a flaw in the reflection signal exceeding the threshold, and extracts this reflection signal as a flaw signal. The extracted flaw signal is stored in the recording device 18 again.

Signal processing at Step S13 and the following steps is performed on the reflection signal that is determined to have the flaw (that is, the flaw signal). On the other hand, the signal processing at Step S13 and the following steps is not performed on the reflection signal that is determined to have no flaw.

(III) Estimation step

Next, the following describes operations of the signal processing device 19 and the recording device 18 at the time of estimating the flaw shape at the estimation step III of the ultrasonic flaw inspection method according to the embodiment of the present invention with reference to FIG. 2. At the estimation step III, first, presence/absence of directivity of the flaw is determined based on the received sound pressure from the flaw signal measured by the ultrasonic probe 11, and the flaw shape is estimated thereafter based on the expected sound pressure corresponding to the presence/absence of the directivity of the flaw and the received sound pressure that is actually measured. Specifically, as illustrated in this drawing, the estimation step III is performed in order of a flaw inspection image acquisition step (S13), a flaw type determination step (S14), and a flaw shape estimation step (S15). The following describes the respective steps in detail assuming that the inspection material is the round bar body RB.

Flaw inspection image acquisition step

In the processing at Step S13, based on a waveform position exceeding the threshold set in advance that is specified at Step S23, the signal processing device 19 reads a plurality of the flaw signals within a range set in advance from among the flaw signals recorded in the recording device 18. Due to this, it is possible to extract a flaw signal group including information such as a position at which the flaw is actually present. That is, it is possible to obtain information of received ultrasonic signals that are reflected from the flaw that is actually present. At Step S14 and the following steps described later, a characteristic amount such as the received sound pressure is extracted from the flaw signal group obtained herein, the flaw type is determined, and the flaw shape is estimated.

Depending on the states of the flaw signals, the flaw signal group may be determined after reading out the flaw signals, and performing signal processing such as aperture synthesis and frequency filtering thereon by the signal processing device 19. At this Step S13, a reception signal group may be imaged for visual understanding. For example, amplitude of the flaw signal can be converted into luminance, a reception time of the flaw signal can be converted into a vertical axis, and the number of waveforms of the flaw signal can be converted into a horizontal axis to be displayed as an image. In the present embodiment, the following processing is described assuming that the flaw signal group is imaged at this Step S13.

Step S13 is not only successively performed while recording the reflection signals by ultrasonic waves, but also may be performed after recording of the reflection signals by ultrasonic waves ends. Processing at Step S14 and Step S15 is performed on the flaw signal group that is read herein. Accordingly, the processing at Step S13 is completed, and the process proceeds to the processing at Step S14.

Flaw type determination step

In the processing at Step S14, the signal processing device 19 determines whether the detected flaw type is a directive flaw or a non-directive flaw using the characteristic of the flaw signal read at Step S13 and a characteristic of the expected sound pressure calculated at Step S12. The determination method for a flaw type will be described later in detail. Accordingly, the processing at Step S14 is completed, and the process proceeds to the processing at Step S15.

Flaw shape estimation step

In the processing at Step S15, the signal processing device 19 estimates the flaw shape and the depth by comparing the flaw signal calculated at Step S13 with the expected sound pressure calculated at Step S12. In the processing at Step S15, specifically, the depth and the flaw shape including inclination of the flaw are estimated by using a correlation between a change in the received sound pressure of the flaw signal in each positional relation received by the ultrasonic probe 11 and a change in the expected sound pressure calculated at Step S12.

As the flaw shape, the depth and an inclination angle are estimated in a case of the directive flaw, and a flaw diameter and a depth position are estimated in a case of the non-directive flaw. The estimation method for the flaw shape will be described later in detail. Accordingly, the processing at Step S15 is completed, and the process proceeds to the processing at Step S16. Furthermore, the processing at the estimation step III is completed, and the process proceeds to the processing at the determination step IV.

(IV) Determination step

Next, the following describes operations of the signal processing device 19 and the recording device 18 at the time of determining acceptance/rejection and/or a required cutting amount for the inspection material at the determination step IV of the ultrasonic flaw inspection method according to the embodiment of the present invention with reference to FIG. 2. As determination at the determination step IV, as illustrated in this drawing, an acceptance/rejection determination and/or cutting amount determination step (Step S16) is performed. The following describes this step in detail assuming that the inspection material is the round bar body RB.

Acceptance/rejection determination and/or cutting amount determination step

In the processing at Step S16, based on the flaw shape and the depth estimated at Step S15, the signal processing device 19 performs acceptance/rejection determination for the inspection material, or determines a required cutting amount for the inspection material. Alternatively, the signal processing device 19 may perform acceptance/rejection determination for the inspection material, and determine the required cutting amount for the inspection material based on the flaw shape and the depth estimated at Step S15.
For example, in a case in which the directive flaw or the non-directive flaw is estimated to be present at a distance of 2 mm or less from the surface layer as a result of Step S15, the inspection material is accepted (as a material required to be repaired), and in other cases, the inspection material is rejected. In calculating a range in which the flaw is present and the required cutting amount, shapes of the non-directive flaw and the directive flaw are assumed to be considered. For example, in a case in which the range in which the flaw is present is up to 1.5 mm under the surface layer based on the flaw shape estimated at Step S15, a portion at which the flaw is detected is cut by 1.5 mm or more, or repaired. Accordingly, the continuous determination step IV is completed.

Calculation method for expected sound pressure

Next, the following describes a calculation method for a received sound pressure (that is, the expected sound pressure) of the flaw signal as reflection from the virtual flaw that is expected from the directivity of the ultrasonic probe 11, which is used for estimating the flaw shape at the estimation step III of the ultrasonic flaw inspection method according to the embodiment of the present invention with reference to FIG. 2. As illustrated in this drawing, the calculation method for the expected sound pressure is performed in order of a flaw inspection condition input step (S11) and an expected sound pressure calculation step (S12). The following describes the respective steps in detail assuming that the inspection material is the round bar body RB.

Flaw inspection condition input step

In the processing at Step S11, the signal processing device 19 acquires ultrasonic flaw inspection conditions such as dimensions of the round bar body RB, dimensions and the shape of the ultrasonic probe 11, a measurement pitch, a positional relation with respect to the round bar body RB, and an ultrasonic flaw inspection range. The ultrasonic flaw inspection conditions may be acquired not only before the flaw signal is acquired by ultrasonic waves, but also during a period in which the reflection signal is being acquired by ultrasonic waves, or after the reflection signal is acquired by ultrasonic waves. Accordingly, the processing at Step S11 is completed, and the process proceeds to the processing at Step S12.

Expected sound pressure calculation step

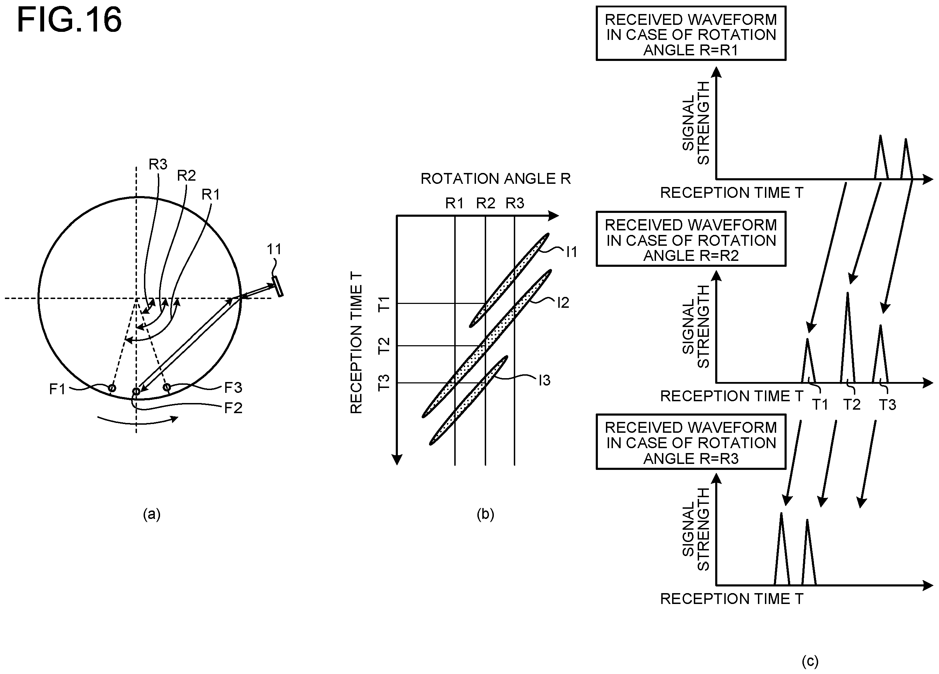

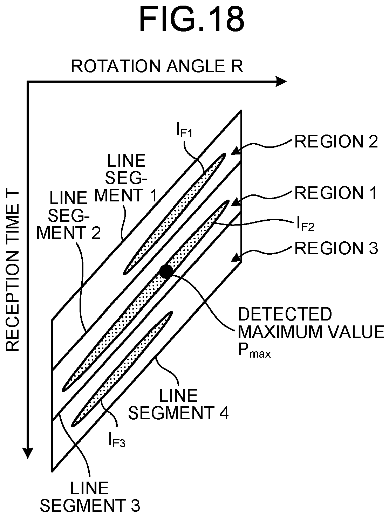

Next, in the processing at Step S12, the signal processing device 19 calculates the expected sound pressure based on the ultrasonic directivity of the ultrasonic probe 11 using the ultrasonic flaw inspection conditions acquired in the processing at Step S11. In the processing at Step S12, the signal processing device 19 calculates the expected sound pressure for two types of cases including a case of the non-directive flaw and a case of the directive flaw as the expected sound pressure considering the ultrasonic directivity of the ultrasonic probe 11. The calculation is performed without using the reflection signal that is actually measured and the reception signal calculated from the reflection signal. That is, a virtual flaw is set instead of the flaw actually present in the inspection material, and the received sound pressure of the flaw signal reflected from the virtual flaw is calculated as the expected sound pressure.
The expected sound pressure varies depending on the flaw shape (for example, the depth and the angle in a case of the directive flaw, and the depth and a radius in a case of the non-directive flaw). Thus, at Step S12, it is preferable to set a plurality of types of flaw shapes for the virtual flaw, and calculate the expected sound pressure for each of settings. In this case, in the processing at Step S14 and the following steps, expected sound pressures corresponding to a plurality of types of the flaw shapes can be compared with each other, and the expected sound pressures close to each other can be used to perform the signal processing at Step S14 and the following steps. At this Step S12, divided regions to be used in FIG. 16 and FIG. 18 (described later) may be calculated to be set at Step S14 and the following steps.

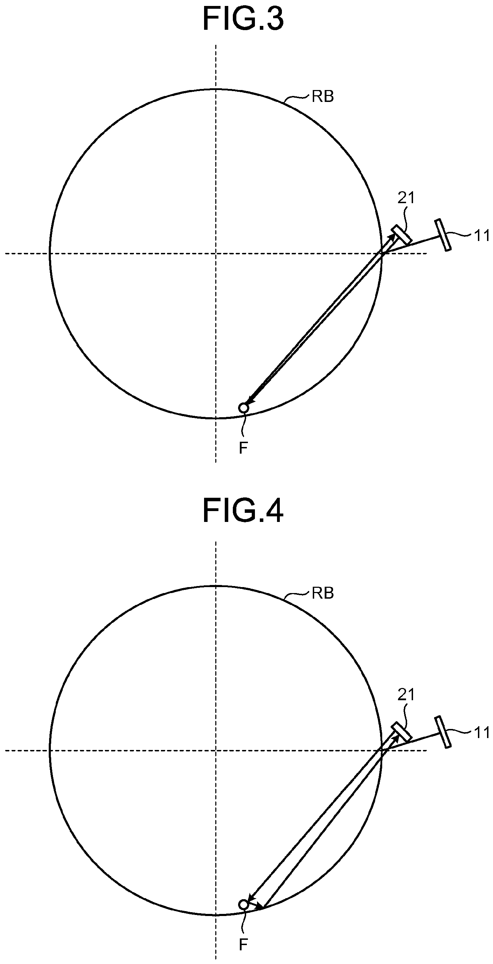

In the processing at Step S12, the signal processing device 19 calculates, as the expected sound pressure considering the ultrasonic directivity of the ultrasonic probe 11, the received sound pressure of a propagation path of one or more of four reflection models described later (refer to FIG. 3 to FIG. 10). In the processing at Step S12, the signal processing device 19 calculates the expected sound pressure considering the ultrasonic directivity of the ultrasonic probe 11 based on the propagation path calculated from each positional relation between the ultrasonic probes 11 and the flaw and the directivity made by a center axis of the flaw or the ultrasonic probe 11. The calculation method for the expected sound pressure will be described later in detail. Accordingly, the processing at Step S12 is completed.

The flaw inspection condition input step S11 and the expected sound pressure calculation step S12 may be performed at any timing, that is, before the flaw signal is acquired by ultrasonic waves, during the flaw signal is being acquired by ultrasonic waves, or after the flaw signal is acquired by ultrasonic waves. It is sufficient that the expected sound pressure calculation step S12 is completed and the expected sound pressure is calculated before the determination step S14 for a flaw type described above. In other words, it is sufficient that the expected sound pressure calculation step S12 is completed before the determination step S14 for a flaw type in the estimation step III is started. On the other hand, the expected sound pressure calculation step S12 may be performed at an optional timing with respect to the reception step I, the extraction step II, and the flaw inspection image acquisition step S13.

The flaw inspection condition input step S11 and the expected sound pressure calculation step S12 are not necessarily performed every time the flaw signal acquired by ultrasonic waves is received. For example, in a case in which the shapes of the inspection object, and relative movement speeds between the ultrasonic probe 11 and the inspection object are substantially the same, even if the inspection object is changed multiple times, Step S11 and Step S12 are not necessarily performed every time the inspection object is changed. If the expected sound pressure is obtained at Step S12 once, the ultrasonic flaw inspection method according to the present invention can be performed by using the same expected sound pressure even when the inspection object is changed multiple times. The ultrasonic directivity in the present embodiment indicates a property such that an ultrasonic sound pressure is strongly distributed and propagated in a specific direction. It is indicated that, in a case of a typical single ultrasonic probe, a sound pressure on a center axis of the probe becomes the largest at a position more distant than a short distance sound field.

Next, the following describes the calculation method for the expected sound pressure considering the ultrasonic directivity of the ultrasonic probe 11 (Step S12 in FIG. 2) in the ultrasonic flaw inspection method according to the present embodiment in detail with reference to FIG. 3 to FIG. 15.

Flaws present in the inner part of the round bar body RB are broadly classified into directive flaws and non-directive flaws. The directive flaw includes a belt-shaped or disc-shaped reflective surface, and has strong reflection directivity in a specific direction. A surface crack detected by angle flaw inspection is the directive flaw in many cases. On the other hand, the non-directive flaw is an inclusion and the like present in the vicinity of the surface layer, and is a spherical-shaped or cylindrical-shaped flaw.

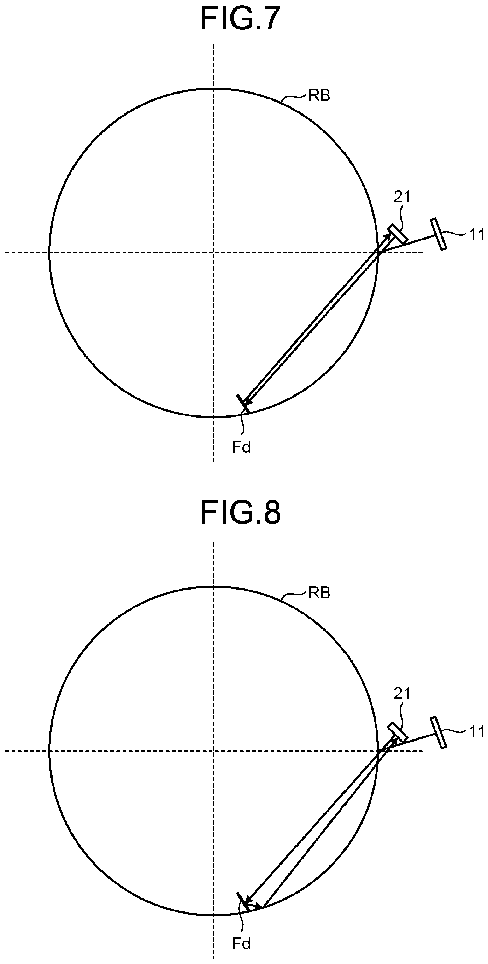

It is known that reflection signals from a plurality of propagation paths can be obtained for the same flaw object in angle flaw inspection. FIG. 3 to FIG. 6 illustrate the propagation path of the reflection signal in a case of the non-directive flaw, and FIG. 7 to FIG. 10 illustrate the propagation path of the reflection signal in a case of the directive flaw.

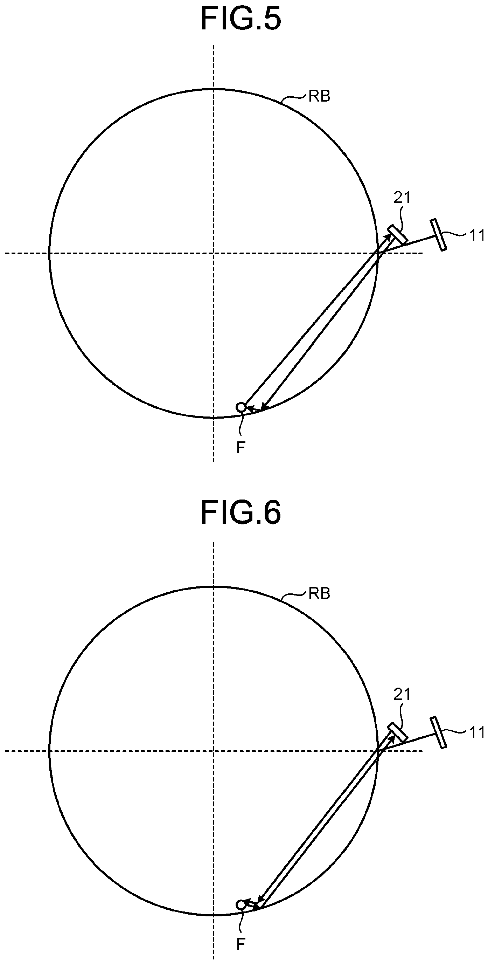

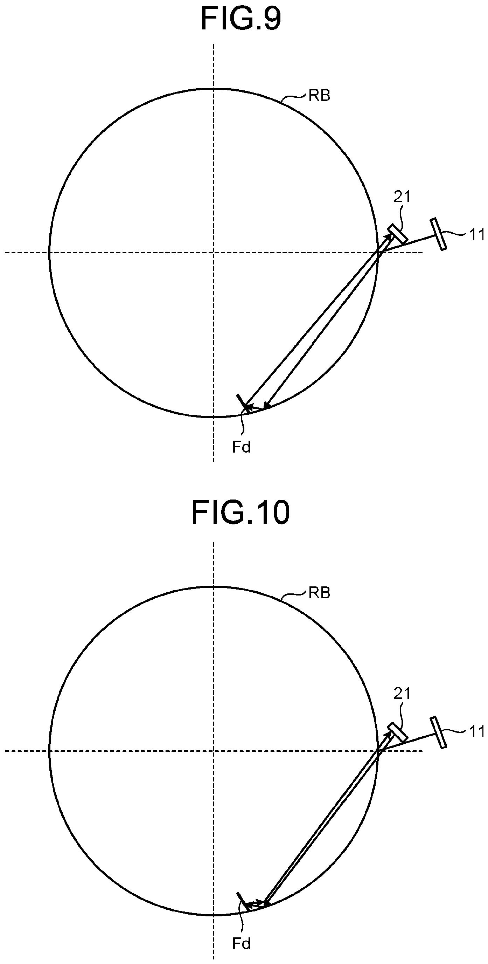

FIG. 3 and FIG. 7 illustrate a reflection model propagating in order of (A) the ultrasonic probe 11, the flaw, and the ultrasonic probe 11. FIG. 4 and FIG. 8 illustrate a reflection model propagating in order of (B) the ultrasonic probe 11, the flaw, a wall surface of the inspection material (round bar body RB), and the ultrasonic probe 11. FIG. 5 and FIG. 9 illustrate a reflection model propagating in order of (C) the ultrasonic probe 11, the wall surface of the inspection material, the flaw, and the ultrasonic probe 11. FIG. 6 and FIG. 10 illustrate a reflection model propagating in order of (D) the ultrasonic probe 11, the wall surface of the inspection material, the flaw, the wall surface of the inspection material, and the ultrasonic probe 11.

In FIG. 3 to FIG. 10, the reference numeral 11 denotes an actual ultrasonic probe, the reference numeral 21 denotes an apparent ultrasonic probe in angle flaw inspection, the reference sign F denotes the non-directive flaw, and the reference sign Fd denotes the directive flaw. In the ultrasonic flaw inspection method according to the present embodiment, the expected sound pressure is calculated based on a positional relation between the flaw and the ultrasonic probe for each of the propagation paths.

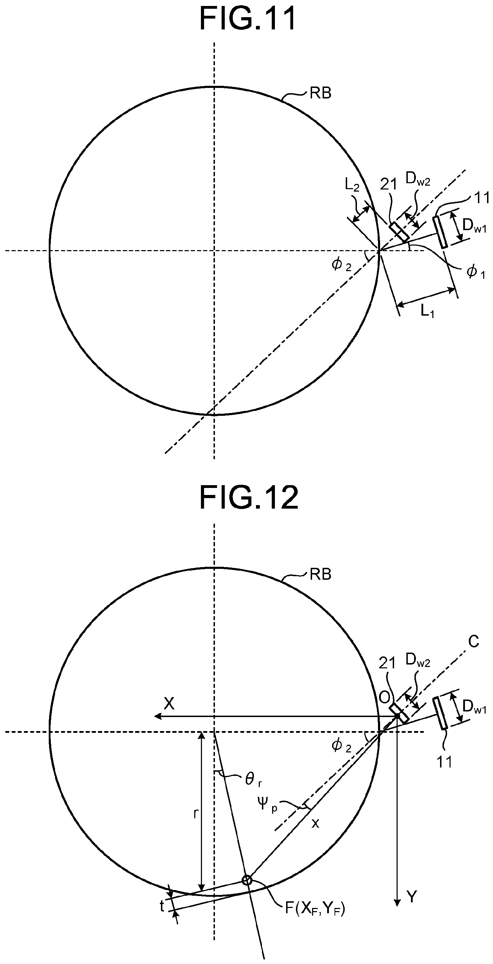

FIG. 11 illustrates a positional relation between the ultrasonic probe 11 and the apparent ultrasonic probe 21. Assuming that an incidence angle of the ultrasonic probe 11 is $\varphi_1$, a probe width is $D_{w1}$, a probe height is $D_h$, a wedge distance is $L_1$, a sound velocity in a wedge is $C_{wed}$, and a sound velocity in steel is $C_s$, a refraction angle $\varphi_2$, a probe width $D_{w2}$, and a wedge distance $L_2$ of the apparent ultrasonic probe 21 are represented by the following expressions (1) to (3).

$$\phi_2 = \sin^{-1}\left(\sin\phi_2 \times \frac{C_s}{C_{wed}}\right) \tag{1}$$

$$D_{W2} = L_1 \times \frac{\cos\phi_2}{\cos\phi_1} \tag{2}$$

$$L_2 = L_1 \times \frac{\tan\phi_1}{\tan\phi_2} \tag{3}$$

Herein, the apparent ultrasonic probe 21 indicates a virtual ultrasonic probe "that is assumed to be present in the inspection material, and be able to directly propagate ultrasonic waves without considering refraction". In the angle flaw inspection method used in the present embodiment, at the time when ultrasonic waves are refracted to be incident into the inspection material, propagation of ultrasonic waves in the inspection material is assumed such that the ultrasonic waves are directly propagated from the apparent ultrasonic probe present in the inspection material. The ultrasonic probe 21 is actually present outside the inspection material, and present in a medium of a wedge part (not illustrated).

A propagation path required for obtaining a value of the expected sound pressure is derived using a propagation path from the apparent ultrasonic probe 21. In this case, calculation is performed by using the apparent ultrasonic probe 21 for simplifying the calculation, but the propagation path from the ultrasonic probe 21 may be derived while considering a refraction phenomenon according to Snell's law for each of the propagation paths.

First, the following describes the calculation method for the expected sound pressure of the non-directive flaw. The expected sound pressure in the propagation path of FIG. 3 is calculated by using FIG. 12. Assuming that an origin is O, a radius of the round bar body RB is r, a flaw rotation angle is $\theta_r$, and a depth of a flaw position is t, coordinates F $(X_F, Y_F)$ of the non-directive flaw F is represented by the following expression (4) and the following expression (5).

$$X_F = L_2 \cos\phi_2 + r - (r - t)\sin\theta_r \tag{4}$$

$$Y_F = L_2 \sin\phi_2 + (r - t)\cos\theta_r \tag{5}$$

Assuming that an angle formed by a straight line OF and the apparent ultrasonic probe 21 is $\psi_p$, the angle $\psi_p$ is represented by the following expression (6).

$$\psi_p = \frac{\pi}{2} - \phi_2 - \tan^{-1}\left(\frac{X_F}{Y_F}\right) \tag{6}$$

Assuming that a transmitted sound pressure is $P_0$, a probe area is A, a frequency is Fr, a length of a line segment OF is x, a directivity coefficient of the apparent ultrasonic probe 21 with respect to ultrasonic waves is $D_p$, reflectivity of the flaw shape is $\gamma$, a flaw radius is d, and a flaw length is L, the probe area A, the reflectivity $\gamma$, and the directivity coefficient $D_p$ are represented by the following expression (7) to the following expression (12).

$$A = D_h \times D_{w2} \tag{7}$$

$$\lambda = \frac{C_s}{Fr} \tag{8}$$

$$m(\psi) = \frac{\pi D_{w2}}{\lambda} \times \sin \psi \qquad (9)$$

$$D_p(\psi) = \frac{\sin(m(\psi))}{m(\psi)} \qquad (10)$$

$$\text{IN CASE OF } 2d \geq 0.2\lambda, L \geq 3\sqrt{\lambda x}$$

$$\gamma(x) = L\sqrt{\frac{2d}{((d+x)\lambda x)}} \qquad (11)$$

$$\text{IN CASE OF } 2d \geq 0.2\lambda, 0.8\sqrt{\lambda x} \geq L \geq 0.7\lambda$$

$$\gamma(x) = L\sqrt{\frac{2d}{((d+x)\lambda x)}} \qquad (12)$$

An expected sound pressure $P_{F1}$ in the propagation path of FIG. 3 is represented by a product of a directivity coefficient $D_p(\Psi_p)$ at the time of transmission of the ultrasonic probe 21, reflectivity $\gamma(x)$ of the flaw, and the directivity coefficient $D_p(\Psi_p)$ at the time of reception of the ultrasonic probe 21. According to the expression (7) to the expression (12) described above, the expected sound pressure $P_{F1}$ is represented by the following expression (13). A propagation time $T_1$ in the propagation path of FIG. 3 is represented by a quotient obtained by dividing a reciprocating distance of the line segment OF by the sound velocity in steel, which is represented by the following expression (14).

$$P_{F1} = \frac{A}{2\lambda x} D_p(\psi_p)^2 \times \gamma(x) \qquad (13)$$

$$T_1 = \frac{2x}{C_s} \qquad (14)$$

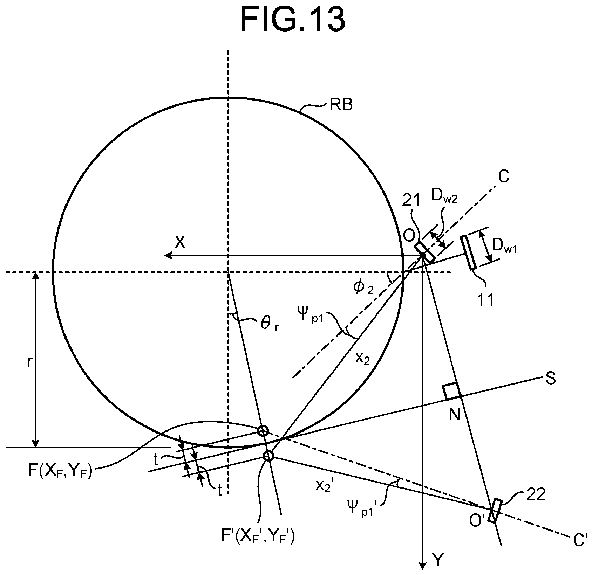

The expected sound pressure in the propagation paths of FIG. 4 to FIG. 6 is calculated by using FIG. 13. Assuming that coordinates of a mirror image F' of the non-directive flaw F with respect to a normal line S is F'($X_F$', $Y_F$'), a mirror image of the apparent ultrasonic probe 21 is 22, a mirror image of the origin O is O', a length of a line segment OF' is $x_2$, a length of a line segment O'F' is $X_2$', and an angle formed by the line segment O'F' and a center axis C' of the mirror image O' is $\psi_{p1}$', the coordinates F'($X_F$', $Y_F$') of the mirror image F' are represented by the following expression (15) and the following expression (16).

$$X_F{}' = L_2 \cos\phi_2 + r - (r+t)\sin\theta_r \qquad (15)$$

$$Y_F{}' = L_2 \sin\phi_2 + (r+t)\cos\theta_r \qquad (16)$$

An expected sound pressure $P_{F2}$ in the propagation paths of FIG. 4 and FIG. 5 is represented by a product of a directivity coefficient $D_p(\Psi_{p1})$ at the time of transmission of the ultrasonic probe 21, reflectivity $\gamma(x_2)$ of the flaw, and a

directivity coefficient $D_p(\Psi_{p1}')$ at the time of reception of the ultrasonic probe 21. According to the expression (15) and the expression (16), the expected sound pressure $P_{F2}$ is represented by the following expression (17). A propagation time $T_2$ in the propagation paths of FIG. 4 and FIG. 5 is represented by a quotient obtained by dividing a total distance of line segments OF' and F'O' by the sound velocity in steel, which is represented by the following expression (18).

$$P_{F2} = \frac{A}{\lambda\left(x_2 + x_2'\right)} D_p\left(\psi_{p1}\right) \times D_p\left(\psi_{p1}'\right) \times \gamma(x_2) \qquad (17)$$

$$T_2 = \frac{\left(x_2 + x_2'\right)}{C_s} \qquad (18)$$

An expected sound pressure $P_{F3}$ in the propagation path of FIG. 6 is represented by a product of the directivity coefficient $D_p(\Psi_{p1})$ at the time of transmission of the ultrasonic probe 21, reflectivity $\gamma(x_2)$ of the flaw, and the directivity coefficient $D_p(\Psi_{p1})$ at the time of reception of the ultrasonic probe 21. Thus, the expected sound pressure $P_{F3}$ is represented by the following expression (19). A propagation time $T_3$ in the propagation path of FIG. 6 is represented by a quotient obtained by dividing a reciprocating distance of the line segment OF' by the sound velocity in steel, which is represented by the following expression (20).

$$P_{F3} = \frac{A}{2\lambda x_2} D_p\left(\psi_{p1}\right)^2 \times \gamma(x_2) \qquad (19)$$

$$T_3 = \frac{2x_2}{C_s} \qquad (20)$$

As described above, by using the expected sound pressure and the propagation time of the propagation paths obtained by the expression (13), the expression (14), and the expression (17) to the expression (20), it is possible to theoretically simulate the received sound pressure and the propagation time that are expected when flaw inspection is performed on the non-directive flaw while changing the positional relation between the round bar body RB and the ultrasonic probe 11.

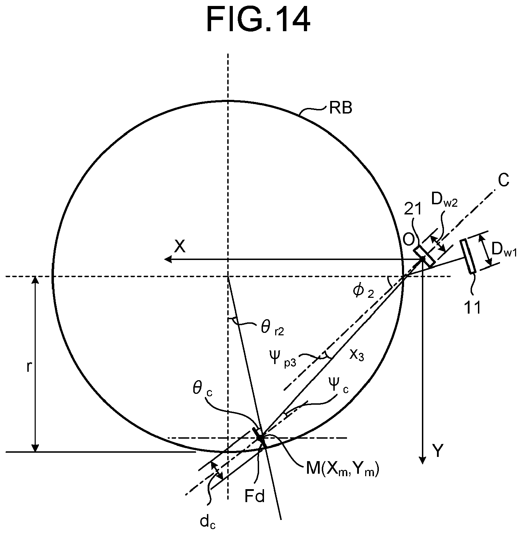

Next, the following describes the calculation method for the expected sound pressure in the directive flaw. The expected sound pressure in the propagation path of FIG. 7 is calculated by using FIG. 14. Assuming that the origin is O, a flaw rotation angle is $\theta_{r2}$, a flaw inclination angle is $\theta_c$, a flaw depth is $d_c$, a directivity coefficient of the directive flaw Fd is $D_c$, the directivity coefficient of the apparent ultrasonic probe 21 with respect to ultrasonic waves is $D_p$, reflectivity of the flaw shape is $\gamma_2$, the flaw length is $L_2$, coordinates of a middle point of the directive flaw Fd is $M(X_m, Y_m)$, an angle formed by a line segment OM and the center axis C of the apparent ultrasonic probe 21 is $\psi_{p3}$, an angle formed by a center axis of the directive flaw Fd and the line segment OM is $\psi_c$, and a length of the line segment OM is $x_3$, the coordinates $M(X_m, Y_m)$ of the middle point of the directive flaw Fd, the formed angle $\psi_{p3}$, and the formed angle $\psi_c$ are represented by the following expression (21) to the following expression (24).

$$X_M = L_2 \cos\phi_2 + r(1 - \sin\theta_{r2}) + \frac{d_c}{2}\sin(\theta_c + \theta_{r2}) \qquad (21)$$

$$Y_M = L_2 \sin\phi_2 + r\cos\theta_{r2} - \frac{d_c}{2}\cos(\theta_c + \theta_{r2}) \qquad (22)$$

$$\psi_{p3} = \frac{\pi}{2} - \phi_2 - \tan^{-1}\left(\frac{X_M}{Y_M}\right) \tag{23}$$

$$\psi_c = \frac{\pi}{2} - \tan^{-1}\left(\frac{X_M}{Y_M}\right) - \theta_c - \theta_{r2} \tag{24}$$

The directivity coefficient $D_c$ of the directive flaw Fd and the flaw reflectivity $\gamma_2$ are represented by the following expression (25) to the following expression (29).

$$D_c(\psi, \psi') = \frac{\sin(m_2(\psi, \psi'))}{m_2(\psi, \psi')} \tag{25}$$

$$m_2(\psi, \psi') = \frac{\pi d_c}{\lambda} \times \sin(\psi' - \psi) \tag{26}$$

$$\text{IN CASE OF } 0.8\sqrt{\lambda x} \geq d_c \geq 0.7\lambda, L_2 \geq 3\sqrt{\lambda x}$$

$$\gamma_2(x) = d_c\sqrt{\frac{2}{\lambda x}} \tag{27}$$

$$\text{IN CASE OF } 0.8\sqrt{\lambda x} \geq d_c \geq 0.7\lambda, 0.8\sqrt{\lambda x} \geq L_2 \geq 0.7\lambda$$

$$\gamma_2(x) = \frac{2d_c L_2}{\lambda x} \tag{28}$$

$$\text{IN CASE OF } d_c \geq 3\sqrt{\lambda x}, L_2 \geq 3\sqrt{\lambda x}$$

$$\gamma_2(x) = 1 \tag{29}$$

An expected sound pressure $P_{F4}$ in the propagation path of FIG. 7 is represented by a product of a directivity coefficient $D_p(\Psi_{p3})$ at the time of transmission of the ultrasonic probe 21, reflectivity $\gamma_2(x_3)$ of the flaw, a directivity coefficient $D_c(\Psi_c, -\Psi_c)$ at the time of reflection from the flaw, and the directivity coefficient $D_p(\Psi_{p3})$ at the time of reception of the ultrasonic probe 21. According to the expression (21) to the expression (29), the expected sound pressure $P_{F4}$ is represented by the following expression (30). A propagation time $T_4$ in the propagation path of FIG. 7 is represented by a quotient obtained by dividing a reciprocating distance of the line segment OM by the sound velocity in steel, which is represented by the following expression (31). The directivity coefficient $D_p$ of the ultrasonic probe 21 is the same as that in the case of the non-directive flaw.

$$P_{F4} = \frac{A}{2\lambda x_3} \times D_p(\psi_{p3})^2 \times D_c(\psi_c, -\psi_c) \times \gamma_2(x_3) \tag{30}$$

$$T_4 = \frac{2x_3}{C_s} \tag{31}$$

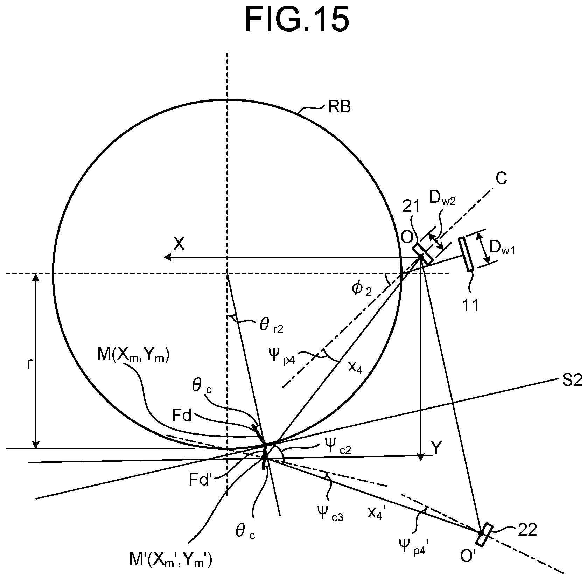

The expected sound pressure in the propagation paths of FIG. 8 to FIG. 10 is calculated by using FIG. 15. Assuming that a mirror image of the directive flaw Fd with respect to a normal line S2 is Fd', coordinates of a middle point of the mirror image Fd' is $M(X_m', Y_m')$, the mirror image of the apparent ultrasonic probe 21 is 22, the mirror image of the origin O is O', a length of a line segment OM' is $x_4$, a length of a line segment O'M' is $x_4'$, an angle formed by the line segment OM' and the center axis C of the apparent ultrasonic probe 21 is $\psi_{p4}$, an angle formed by a line segment M'O and the center axis of the mirror image Fd' is $\psi_{c2}$, an angle formed by a line segment M'O' and the center axis of the mirror image Fd' is $\psi_{c3}$, and an angle formed by the line segment M'O' and the center axis of the mirror image 22 is $\psi_{p4}'$, the coordinates $M(X_m', Y_m')$ of the middle point of the mirror image Fd', the formed angle $\psi_{p4}$ and the formed angle $\psi_{c2}$ are represented by the following expression (32) to the following expression (35).

$$X_M{}' = L_2 \cos\phi_2 + r(1 - \sin\theta_{r2}) + \frac{d_c}{2}\sin(\theta_c - \theta_{r2}) \quad (32)$$

$$Y_M{}' = L_2 \sin\phi_2 + r\cos\theta_{r2} - \frac{d_c}{2}\cos(\theta_c - \theta_{r2}) \quad (33)$$

$$\psi_{p4} = \frac{\pi}{2} - \phi_2 - \tan^{-1}\left(\frac{X_M{}'}{Y_M{}'}\right) \quad (34)$$

$$\psi_{c2} = \theta_c - \theta_{r2} + \psi_{p4} + \phi_2 \quad (35)$$

An expected sound pressure $P_{F5}$ in the propagation paths of FIG. 8 and FIG. 9 is represented by a product of a directivity coefficient $D_p(\Psi_{p4})$ at the time of transmission of the ultrasonic probe 21, reflectivity $\gamma_2(x_4)$ of the flaw, a directivity coefficient $D_c(\Psi_{c2}, \Psi_{c3})$ at the time of reflection from the flaw, and a directivity coefficient $D_p(\Psi_{p4}')$ at the time of reception of the ultrasonic probe 21. According to the expression (32) to the expression (35), the expected sound pressure $P_{F5}$ is represented by the following expression (36). A propagation time T5 in the propagation paths of FIG. 8 and FIG. 9 is represented by a quotient obtained by dividing a total distance of the line segment OM' and the line segment M'O' by the sound velocity in steel, which is represented by the following expression (37). The directivity coefficient $D_p$ of the ultrasonic probe 21 is the same as that in the case of the non-directive flaw.

$$P_{F5} = \frac{A}{\lambda\left(x_4 + x_4{}'\right)} \times D_p\left(\psi_{p4}\right) \times D_p\left(\psi_{p4}{}'\right) \times D_c\left(\psi_{c2}, \psi_{c3}\right) \times \gamma_2\left(x_4\right) \times \cos\psi_{c2} \quad (36)$$

$$T_5 = \frac{x_4 + x_4{}'}{C_s} \quad (37)$$

An expected sound pressure $P_{F6}$ in the propagation path of FIG. 10 is represented by a product of the directivity coefficient $D_p(\Psi_{p4})$ at the time of transmission of the ultrasonic probe 21, the reflectivity $\gamma_2(x_4)$ of the flaw, a directivity coefficient $D_c(\Psi_{c2}, -\Psi_{c2})$ at the time of reflection from the flaw, and the directivity coefficient $D_p(\Psi_{p4})$ at the time of reception of the ultrasonic probe 21. Thus, the expected sound pressure $P_{F6}$ is represented by the following expression (38). A propagation time $T_6$ in the propagation path of FIG. 10 is represented by a quotient obtained by dividing a reciprocating distance of the line segment OM' by the sound velocity in steel, which is represented by the following expression (39). The directivity coefficient $D_p$ of the ultrasonic probe 11 is the same as that in the case of the non-directive flaw.

$$P_{F6} = \frac{A}{2\lambda x_4} \times D_p\left(\psi_{p4}\right)^2 \times D_c\left(\psi_{c2}, -\psi_{c2}\right) \times \gamma_2\left(x_4\right) \tag{38}$$

$$T_6 = \frac{2x_4}{C_s} \tag{39}$$

As described above, by using the expected sound pressure and the propagation time of the propagation paths obtained by the expression (30), the expression (31), and the expression (37) to the expression (39), it is possible to theoretically simulate the received sound pressure and the propagation time that are expected when flaw inspection is performed on the directive flaw while changing the positional relation between the round bar body RB and the ultrasonic probe 11. All of the expression (13), the expression (17), the expression (19), the expression (30), the expression (36), and the expression (38) include the directivity coefficient $D_p$ of the ultrasonic probe 21 with respect to ultrasonic waves. As is clear from these expressions, the expected sound pressure is calculated while considering the ultrasonic directivity of the ultrasonic probe 21.

As a specific method of calculating the expected sound pressure, the expected sound pressure can be calculated at the expected sound pressure calculation step S12 using one or more of:

> (A) the reflection model propagating in order of the ultrasonic probe 11, the flaw, and the ultrasonic probe 11;
> (B) the reflection model propagating in order of the ultrasonic probe 11, the flaw, the wall surface of the inspection material, and the ultrasonic probe 11;
> (C) the reflection model propagating in order of the ultrasonic probe 11, the wall surface of the inspection material, the flaw, and the ultrasonic probe 11; and
> (D) the reflection model propagating in order of the ultrasonic probe 11, the wall surface of the inspection material, the flaw, the wall surface of the inspection material, and the ultrasonic probe.

It is more preferable that the expected sound pressure is calculated by using two or more of the models of (A) to (D) described above. This is because accuracy in determination of the flaw type and estimation of the flaw shape is increased by comparing a plurality of the expected sound pressures of different paths with each other.

Actually, the reflection signals from the propagation paths indicated by (A) to (D) described above are received at the same time, so that it is impossible to identify the propagation path from which the flaw signal comes. In the present embodiment, the flaw type or the flaw shape including depth information can be estimated by comparing the expected sound pressure based on the virtual flaw and the received sound pressure calculated from the flaw signal that is actually measured.

Determination method for flaw type

Next, the following describes the determination method for the flaw type (the determination step S14 for the flaw type in FIG. 2) in the estimation step III of the ultrasonic flaw inspection method according to the present embodiment with reference to FIG. 16 to FIG. 18. The present embodiment describes a case in which the flaw type is determined by using the flaw signal group extracted from the received reflection signals as it is.

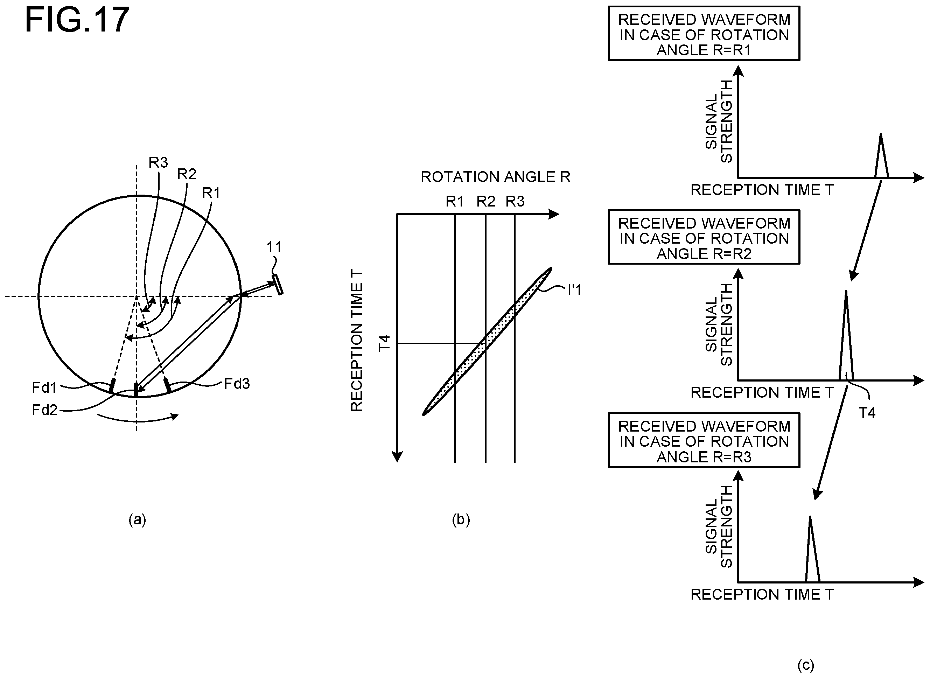

FIG. 16 and FIG. 17 illustrate an example of imaging the flaw signal group at the time when the reflection signal from the flaw is received while the position of the ultrasonic probe 11 is changed. Images of the flaw signal group in FIG. 16(b) and FIG. 17(b) are obtained by converting an amplitude strength of the flaw signal into luminance. FIG. 16 is a diagram schematically illustrating an example of the determination method for the non-directive flaw, and FIG. 17 is a diagram schematically illustrating an example of the determination method for the directive flaw.

FIG. 16(a) is a diagram schematically illustrating an example in which the position of the non-directive flaw viewed from the ultrasonic probe 11 moves in order of F1, F2, and F3. FIG. 16(b) is obtained by converting the amplitude strength of the flaw signal into luminance to be imaged for the flaw signal group that is obtained when the relative position between the flaw and the ultrasonic probe is changed as illustrated in FIG. 16(a). The reference signs I1, I2, and I3 in FIG. 16(b) respectively denote signals obtained by reflection paths exemplified in FIG. 3 to FIG. 6.

The propagation paths in FIG. 4 and FIG. 5 are different from each other, but path lengths thereof are the same, so that a flaw image is obtained as a sum total I2 of the two paths. FIG. 16(c) represents a change in a waveform of the flaw signal group in a case in which a rotation angle R is assumed to be each of rotation angles R1, R2, and R3 in FIG. 16(a) and FIG. 16(b). In other words, FIG. 16(c) illustrates a relation between a signal strength and a reception time T in each case in which the rotation angle R in FIG. 16(b) is each of R1, R2, and R3. As illustrated in FIG. 16(c), if the rotation angle R is changed, the signal strength is also changed even with the same signal. As is clear from FIG. 16, in a case of the non-directive flaw, the reflection signals from the flaw through a plurality of the paths can be found, and the image of FIG. 16(b) is changed depending on the flaw position, the flaw inspection condition, and the like.

FIG. 17(a) is a diagram schematically illustrating an example in which the position of the directive flaw viewed from the ultrasonic probe 11 moves in order of Fd1, Fd2, and Fd3. FIG. 17(b) is obtained by converting the amplitude strength of the flaw signal into luminance to be imaged for the flaw signal group that is obtained when the relative position between the flaw and the ultrasonic probe is changed as in FIG. 17(a). In FIG. 17(b), I'1 represents a signal obtained by any of the reflection paths in FIG. 7 to FIG. 10.

The propagation paths in FIG. 8 and FIG. 9 are different from each other, but the path lengths thereof are the same, so that the flaw image is obtained as a sum total I'1 of the two paths. The propagation path by which the flaw image can be obtained is different depending on the flaw shape, and there may be a case in which two or more flaw images are found. FIG. 17(c) represents a change in the waveform of the flaw signal group in a case in which the rotation angle R is assumed to be each of R1, R2, and R3 in FIG. 17(a) and FIG. 17(b). In other words, FIG. 17(c) illustrates a relation between the signal strength and the reception time T in each case in which the rotation angle R in FIG. 17(b) is each of R1, R2, and R3. As illustrated in FIG. 17(c), if the rotation angle R is changed, the signal strength is also changed even with the same signal. As is clear from FIG. 17, in a case of the directive flaw, the reflection signal from the flaw through a single path can be found, and the image of FIG. 17(b) is changed depending on the flaw position, the flaw inspection condition, and the like.

As illustrated in FIG. 16 and FIG. 17, as the positional relation with respect to the flaw is changed, the reception time and the signal strength of the reflection signal from the flaw is changed. Actually, a degree of the signal strength is represented by a color map or a gradation, for example, but the degree of the signal strength is not represented in FIG. 16 and FIG. 17.

The flaw signal group is a plurality of flaw signals cut out in a specific range defined by the number of waveforms and a time direction of the flaw signal. On the other hand, the received sound pressure calculated at Step S14 indicates a maximum value within a specific time range as the flaw signal group calculated for each waveform. As a summary of the relation between the steps in FIG. 2, the signal processing device 19 images the flaw signal group to be stored in the recording device 18 at Step S13.

On the other hand, at Step S14, the signal processing device 19 fractionates the flaw signal group into the regions illustrated in FIG. 16 and FIG. 17, calculates the received sound pressure for each of the regions based on the fractionization, and determines the flaw type based on the received sound pressure. Specifically, the signal processing device 19 extracts the flaw signal group from the stored flaw signals to be imaged, divides the extracted flaw signal group into the regions that are previously set at Step S12 (for example, three regions including a region 1, a region 2, and a region 3), and calculates an amplitude maximum value for each of the divided regions (for example, within the specific time range of each waveform) as the received sound pressure. The signal processing device 19 then determines the flaw type based on the calculated received sound pressure of each of the regions. It is most preferable that the divided regions are calculated at Step S12 and previously set at Step S14, but the divided regions may be set in accordance with luminance distribution of the flaw signal group. It is most preferable that the number of divisions is set to be "3", but may be set to be another number.

As described above in "Calculation method for expected sound pressure", regarding the flaw in the vicinity of the surface layer of the round bar body RB, the propagation paths in FIG. 3 to FIG. 6 can be considered for the non-directive flaw, and the propagation paths in FIG. 7 to FIG. 10 can be considered for the directive flaw. In a case of the non-directive flaw, the reflection signals from the propagation paths of the four types (A) to (D) described above are received at the same time. However, the propagation time is the same in FIG. 4 and FIG. 5, so that three types of waveforms the reception times of which are different from each other are observed as illustrated in FIG. 16(c). On the other hand, in a case of the directive flaw, due to influence of the reflection directivity of the flaw, the reflection signal from the propagation path of one type becomes large as illustrated in FIG. 17(c). However, which reflection signal from any of the propagation paths in FIG. 7 to FIG. 10 becomes large depends on the flaw shape.

In the ultrasonic flaw inspection method according to the present embodiment, the directive flaw and the non-directive flaw are discriminated from each other by using the characteristic described above. That is, in the ultrasonic flaw inspection method according to the present embodiment, flaw image regions are set in the flaw signal group. Each of the flaw image regions to be set is a predetermined range including the reflection signal of any of the models (A) to (D), and set in the time direction and a rotation angle direction based on the position at which the signal strength becomes the highest.

FIG. 18 illustrates an example of setting the flaw image region. A vertical axis indicates the reception time T, and indicates that the time has elapsed as coming downward. On the other hand, a horizontal axis indicates the rotation angle R, and indicates that a rotational position is increased as coming rightward. The image of the received sound pressure is divided into three regions, which are assumed to be $I_{F1}$, $I_{F2}$, and $I_{F3}$ in this order from the top. A detected

maximum value $P_{max}$ represents coordinates of the amplitude maximum value in the flaw signal.

Subsequently, the set flaw image region is divided into the region 1, the region 2, and the region 3 by a line segment 1, a line segment 2, a line segment 3, and a line segment 4 based on the detected maximum value. Subsequently, presence/absence of the flaw is determined using a threshold that is set for each of the divided regions. The threshold for each region can be determined experimentally and empirically, but can also be quantitatively determined based on the calculation result of the expected sound pressure described above.

The flaw is determined to be the non-directive flaw in a case in which signals are present in three of the regions, and the flaw is determined to be the directive flaw in a case in which signals are present in two or less of the regions. Alternatively, the flaw is determined to be the non-directive flaw in a case in which signals are present in two or more of the regions, and the flaw is determined to be the directive flaw in a case in which a signal is present in one of the regions. In the above description, the flaw signal extracted from the reflection signals received by the ultrasonic probe 11 is used as it is, but the extracted flaw signal may be used after being subjected to signal processing and image processing.

Estimation method for flaw shape

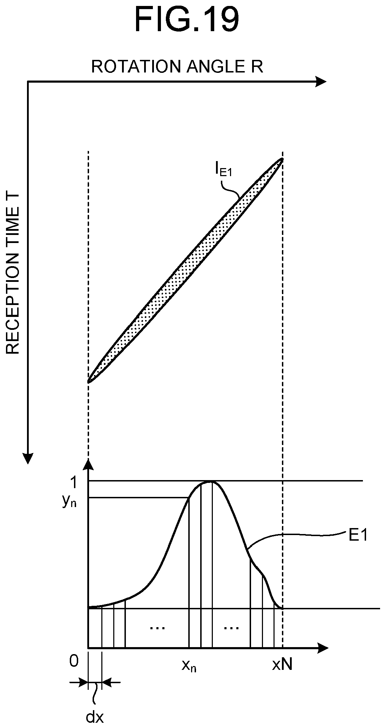

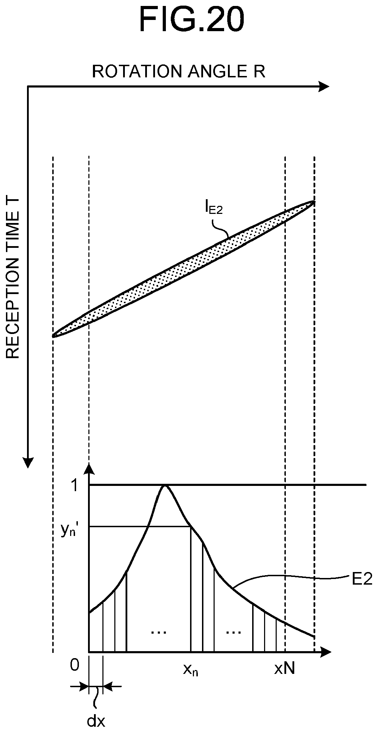

Next, the following describes a method of estimating the flaw shape (the estimation step S15 for the flaw shape in FIG. 2) in the estimation step III of the ultrasonic flaw inspection method according to the present embodiment. It is preferable to use both of the calculated expected sound pressure and the propagation time for estimating the flaw shape, but the flaw shape can be estimated by using only the expected sound pressure. The following describes the estimation method for the flaw shape using only the expected sound pressure with reference to FIG. 19 and FIG. 20.

Herein, a value obtained by calculating the expected sound pressure described above, calculating the expected sound pressures of the respective reflection models (refer to FIG. 3 to FIG. 10), and adding up the expected sound pressures is the received sound pressure from the flaw signal that is actually received by the ultrasonic probe 11.

FIG. 19 illustrates an example of a calculation result of an expected sound pressure E1 that is obtained at the time of assuming the specific flaw shape. In FIG. 19, a vertical axis indicates the reception time T, and indicates that the time has elapsed as coming downward. On the other hand, a horizontal axis indicates the rotation angle R, and indicates that the rotational position is increased as coming rightward. An image of the expected sound pressure is one region, which is assumed to be $I_{E1}$. A lower graph represents a locus of the received sound pressure calculated from the flaw signal group at Step S14. The expected sound pressure E1 is represented by a ratio with respect to a maximum expected sound pressure within a range. A point set $S_0$ including N points is extracted from the obtained expected sound pressure E1 to be compared with the received sound pressure from the flaw signal that is actually measured. Assuming that an interval of the rotation angle R is dx, and the n-th plot is $(x_n, y_n)$, $x_n$ is represented by the following expression (40).

$$x_n = n \times dx \qquad (40)$$

FIG. 20 illustrates an example of a received sound pressure E2 determined to be the flaw that is obtained from actual flaw signal data. In FIG. 20, a vertical axis indicates the reception time T, and indicates that the time has elapsed as coming downward. On the other hand, a horizontal axis indicates the rotation angle R, and indicates that the rotational position is increased as coming rightward. An image of the received sound pressure is one region, which is assumed to be $I_{E2}$. A lower graph represents a locus of the received sound pressure calculated from the flaw signal group. The received sound pressure E2 is represented by a ratio with respect to a maximum received sound pressure within a range. A point set including N points that are extracted from the obtained received sound pressure E2 at a rotation angle interval dx is assumed to be S, the n-th plot of S is assumed to be $(x_n, y_n')$, and an evaluation function E is given as represented by the following expression (41). The continuous N points are selected from the flaw signals extracted as a combination with which E becomes the smallest.

$$E = \sum_{n=0}^{N} \left( y_n - y_n' \right)^2 \qquad (41)$$

Calculation by the expression (40) and the expression (41) described above is performed on the expected sound pressures that are calculated by changing a set value of the shape of the virtual flaw, and the set value of the shape of the virtual flaw with which E becomes the smallest is determined to be an estimation value of the flaw shape. In a case of the directive flaw, the expected sound pressures are calculated while changing the depth and a developing angle of the virtual flaw, and in a case of the non-directive flaw, the expected sound pressures are calculated while changing a depth position of the flaw and a flaw diameter. The flaw shape may also be estimated by combining an absolute value of the expected sound pressure and an actual measured value of the received sound pressure of a known flaw shape.

Alternatively, the flaw shape can be estimated by performing calculation by the expression (40) and the expression (41) described above for the propagation path. The flaw shape can also be estimated by combining the propagation path and the expected sound pressure to be compared with a calculated value.

With the ultrasonic flaw inspection method and the ultrasonic flaw inspection device 1 according to the present embodiment described above, the flaw shape in the inner part of the inspection material can be estimated by using the expected sound pressure calculated from the directivity of the ultrasonic probe 11. Due to this, a range of the flaw present in the inner part of the inspection material is clarified, so that a higher-quality product can be manufactured, and a yield can be improved.

The embodiment to which the invention made by the present inventors has been described above, but the present invention is not limited to the description and the drawings constituting part of the disclosure of the present invention in the present embodiment.

For example, the present invention can be applied as an inspecting device constituting a manufacturing facility for steel materials. Specifically, an inner part of a steel material manufactured by a known or existing manufacturing facility for steel materials may be inspected to find a flaw by the ultrasonic flaw inspection device 1 according to the present invention. The present invention can also be applied as an inspection step included in a manufacturing method for steel materials. Specifically, an inner part of a steel material manufactured at a known or existing steel material manufacturing step may be inspected to find a flaw by the ultrasonic flaw inspection method according to the present invention. With such a manufacturing facility for steel materials and a manufacturing method for steel materials, steel materials can be manufactured with a high yield.

Furthermore, the present invention may be applied to a quality management method for steel materials, and quality management for a steel material may be performed by inspecting an inner part of the steel material to find a flaw. Specifically, flaw inspection can be performed on the inner part of the steel material at a flaw inspection step in the present invention, and quality management for the steel material can be performed based on a flaw inspection result obtained at the flaw inspection step. At the flaw inspection step, a flaw in the inner part of the steel material is inspected, and a result about presence/absence of a flaw, a flaw position, a flaw size, and the like is obtained. At a subsequent quality management step, based on the result about presence/absence of the flaw, the flaw position, and the flaw size obtained at the flaw inspection step, it is determined whether the manufactured steel material satisfies a standard designated in advance to manage the quality of the steel material. With such a quality management method for steel materials, high-quality steel materials can be provided. In this way, the present invention encompasses all other embodiments, examples, operation techniques, and the like that are conceived by those skilled in the art based on the present embodiment.

Reference Signs List

1 ULTRASONIC FLAW INSPECTION DEVICE
11 ULTRASONIC PROBE
12 PROBE HEAD
13 STAND
14 ROTATIONAL DRIVING DEVICE
15 PULSER
16 RECEIVER
17 A/D CONVERTER
18 RECORDING DEVICE
19 SIGNAL PROCESSING DEVICE
20 DISPLAY DEVICE
21 APPARENT ULTRASONIC PROBE
F NON-DIRECTIVE FLAW
Fd DIRECTIVE FLAW
RB ROUND BAR BODY (INSPECTION MATERIAL)

**Claims**

1. An ultrasonic flaw inspection method for inspecting an inner part of an inspection material by transmitting an ultrasonic signal from an ultrasonic probe (11) to the inspection material, and receiving the ultrasonic signal reflected from the inner part of the inspection material as a reflection signal by the ultrasonic probe (11), the ultrasonic flaw inspection method comprising:

a reception step of receiving the reflection signal by the ultrasonic probe (11) while changing positions of the inspection material and the ultrasonic probe; and

an extraction step of extracting, from the reflection signal received at the reception step, a flaw signal as reflection from a flaw (F, Fd) in the inspection material; the method **characterized by**

a flaw shape estimation step of determining presence/absence of directivity of the flaw (F, Fd) based on a received sound pressure obtained from a strength of the flaw signal extracted at the extraction step and estimating a shape of the flaw based on the received sound pressure and an expected sound pressure , wherein

the expected sound pressure is a strength of a flaw signal calculated for a flaw shape of a virtual flaw, corresponding to the determined presence/absence of directivity of the flaw, as expected from ultrasonic directivity of the ultrasonic probe (11).

2. The ultrasonic flaw inspection method according to claim 1, wherein the flaw shape estimation step estimates the shape and a depth of the flaw (F, Fd) using a correlation between the expected sound pressure and the received sound pressure in each positional relation received by the ultrasonic probe (11).

3. An ultrasonic flaw inspection device (1) configured to inspect an inner part of an inspection material by transmitting an ultrasonic signal from an ultrasonic probe (11) to the inspection material, and receiving the ultrasonic signal reflected from the inner part of the inspection material as a reflection signal by the ultrasonic probe (11), the ultrasonic flaw inspection device (1) comprising:

a reception unit (11, 16, 17, 18) configured to receive the reflection signal while changing positions of the inspection material and the ultrasonic probe (11); and

an extraction unit (19) configured to extract, from the reflection signal received by the reception unit, a flaw signal as reflection from a flaw (F, Fd) in the inspection material;

the device (1) **characterized by** further comprising

an expected sound pressure calculation unit (19) configured to calculate an expected sound pressure as a strength of a flaw signal calculated for a flaw shape of a virtual flaw as expected from ultrasonic directivity of the ultrasonic probe (11); and

a flaw shape estimation unit (19) configured to determine presence/absence of directivity of the flaw (F, Fd) based on a received sound pressure obtained from a strength of the flaw signal extracted by the extraction unit and to estimate a shape of the flaw based on the received sound pressure and an expected sound pressure of a flaw shape of a virtual flaw corresponding to the determined presence/absence of directivity of the flaw.

4. A manufacturing facility for steel materials comprising:

a manufacturing facility configured to manufacture a steel material; and

the ultrasonic flaw inspection device (1) according to claim 3 configured to inspect an inner part of the steel material manufactured by the manufacturing facility.

5. A manufacturing method for steel materials, the manufacturing method comprising:

a manufacturing step of manufacturing a steel material; and

a flaw inspection step of performing flaw inspection on an inner part of the steel material manufactured at the manufacturing step using the ultrasonic flaw inspection method according to claim 1 or 2.

6. A quality management method for steel materials, the quality management method comprising:

a flaw inspection step of performing flaw inspection on an inner part of a steel material using the ultrasonic flaw inspection method according to claim 1 or 2; and

a quality management step of performing quality management for the steel material based on a flaw inspection result obtained at the flaw inspection step.

**Patentansprüche**

1. Ultraschall-Fehlerprüfverfahren zum Prüfen eines inneren Teils eines Prüfmaterials durch Übertragen eines Ultraschallsignals von einer Ultraschallsonde (11) zu dem Prüfmaterial und Empfangen des von dem inneren Teil des Prüfmaterials reflektierten Ultraschallsignals als Reflexionssignal durch die Ultraschallsonde (11), das Ultraschall-Fehlerprüfverfahren umfassend:

   einen Empfangsschritt zum Empfangen des Reflexionssignals durch die Ultraschallsonde (11), während Positionen des Prüfmaterials und der Ultraschallsonde geändert werden; und
   einen Extraktionsschritt eines Extrahierens eines Fehlersignals aus dem Reflexionssignal, das bei dem Empfangsschritt empfangen wird, als Reflexion von einem Fehler (F, Fd) in dem Prüfmaterial; wobei das Verfahren **gekennzeichnet ist durch**
   einen Fehlerformschätzungsschritt eines Bestimmens eines Vorhandenseins/Nichtvorhandenseins einer Richteigenschaft des Fehlers (F, Fd) basierend auf einem empfangenen Schalldruck, der aus einer Stärke des Fehlersignals erlangt wird, das bei dem Extraktionsschritt extrahiert wird, und eines Schätzens einer Form des Fehlers basierend auf dem empfangenen Schalldruck und einem erwarteten Schalldruck, wobei der erwartete Schalldruck eine Stärke eines Fehlersignals ist, das für eine Fehlerform eines virtuellen Fehlers berechnet wird, die dem bestimmten Vorhandensein/Nichtvorhandensein der Richteigenschaft des Fehlers entspricht, wie sie von der Ultraschallrichteigenschaft der Ultraschallsonde (11) erwartet wird.

2. Ultraschall-Fehlerprüfverfahren gemäß Anspruch 1, wobei der Fehlerformschätzungsschritt die Form und eine Tiefe des Fehlers (F, Fd) unter Verwendung einer Korrelation zwischen dem erwarteten Schalldruck und dem empfangenen Schalldruck in jeder Positionsbeziehung schätzt, die von der Ultraschallsonde (11) empfangen wird.

3. Ultraschall-Fehlerprüfvorrichtung (1), die konfiguriert ist, um einen inneren Teil eines Prüfmaterials durch Übertragen eines Ultraschallsignals von einer Ultraschallsonde (11) zu dem Prüfmaterial und Empfangen des von dem inneren Teil des Prüfmaterials reflektierten Ultraschallsignals als Reflexionssignal durch die Ultraschallsonde (11) zu prüfen, die Ultraschall-Fehlerprüfvorrichtung umfassend:

   eine Empfangseinheit (11, 16, 17, 18), die konfiguriert ist, um das Reflexionssignal zu empfangen, während Positionen des Prüfmaterials und der Ultraschallsonde (11) geändert werden; und eine Extraktionseinheit (19), die konfiguriert ist, um aus dem Reflexionssignal, das bei dem Empfangsschritt empfangen wird, ein Fehlersignal als Reflexion von einem Fehler (F, Fd) in dem Prüfmaterial zu extrahieren;
   wobei die Vorrichtung (1) **dadurch gekennzeichnet ist, dass** sie ferner
   eine Berechnungseinheit für erwarteten Schalldruck (19) umfasst, die konfiguriert ist, um einen erwarteten Schalldruck als eine Stärke eines Fehlersignals zu berechnen, das für eine Fehlerform eines virtuellen Fehlers berechnet wird, wie sie von der Ultraschallrichteigenschaft der Ultraschallsonde (11) erwartet wird; und
   eine Fehlerformschätzeinheit (19), die konfiguriert ist, um das Vorhandensein/Nichtvorhandensein der Richteigenschaft des Fehlers (F, Fd) basierend auf einem empfangenen Schalldrucks zu bestimmen, der aus einer Stärke des Fehlersignals erlangt wird, das von der Extraktionseinheit extrahiert wird, und um eine Form des Fehlers basierend auf dem empfangenen Schalldrucks und einem erwarteten Schalldruck einer Fehlerform eines virtuellen Fehlers entsprechend dem bestimmten Vorhandensein/Nichtvorhandensein der Richteigenschaft des Fehlers zu schätzen.

4. Herstellungseinrichtung für Stahlmaterialien, umfassend:

   eine Herstellungseinrichtung, die zum Herstellen eines Stahlmaterials konfiguriert ist; und
   Ultraschall-Fehlerprüfvorrichtung (1) gemäß Anspruch 3, die konfiguriert ist, um ein inneres Teil des Stahlmaterials zu prüfen, das von der Herstellungseinrichtung hergestellt wird.

5. Herstellungsverfahren für Stahlmaterialien, das Herstellungsverfahren umfassend:

   einen Herstellungsschritt eines Herstellens eines Stahlmaterial; und
   einen Fehlerprüfschritt zum Ausführen einer Fehlerprüfung an einem inneren Teil des Stahlmaterials, das in dem Herstellungsschritt hergestellt wird, unter Verwendung des Ultraschall-Fehlerprüfverfahrens gemäß Anspruch 1 oder 2.

6. Qualitätsmanagementverfahren für Stahlmaterialien, das Qualitätsmanagementverfahren umfassend:

einen Fehlerprüfschritt zum Ausführen einer Fehlerprüfung an einem inneren Teil eines Stahlmaterials unter Verwendung des Ultraschall-Fehlerprüfverfahrens gemäß Anspruch 1 oder 2; und einen Qualitätsmanagementschritt zum Ausführen eines Qualitätsmanagements für das Stahlmaterial basierend auf einem Fehlerprüfresultat, das bei dem Fehlerprüfschritt erlangt wird.

## Revendications

1. Un procédé d'inspection des défauts par ultrasons pour inspecter une partie intérieure d'un matériau d'inspection en transmettant un signal ultrasonique d'une sonde ultrasonique (11) au matériau d'inspection, et en recevant le signal ultrasonique réfléchi par la partie intérieure du matériau d'inspection en tant que signal de réflexion par la sonde ultrasonique (11), le procédé d'inspection des défauts par ultrasons comprenant :

   une étape de réception consistant à recevoir le signal de réflexion par la sonde ultrasonique (11) tout en changeant les positions du matériau d'inspection et de la sonde ultrasonique ; et
   une étape d'extraction consistant à extraire, à partir du signal de réflexion reçu lors de l'étape de réception, un signal de défaut comme réflexion d'un défaut (F, Fd) dans le matériau d'inspection ;
   une étape d'estimation de la forme du défaut consistant à déterminer la présence/l'absence de directivité du défaut (F, Fd) sur la base d'une pression acoustique reçue obtenue à partir d'une intensité du signal de défaut extrait lors de l'étape d'extraction et à estimer la forme du défaut sur la base de la pression acoustique reçue et d'une pression acoustique prévue, dans laquelle
   la pression acoustique prévue est l'intensité d'un signal de défaut calculé pour la forme d'un défaut virtuel, correspondant à la présence/l'absence déterminée de directivité du défaut, comme prévu à partir de la directivité ultrasonique de la sonde ultrasonique (11).

2. Le procédé d'inspection des défauts par ultrasons selon la revendication 1, dans lequel l'étape d'estimation de la forme du défaut estime la forme et la profondeur du défaut (F, Fd) à l'aide d'une corrélation entre la pression acoustique prévue et la pression acoustique reçue dans chaque relation de position reçue par la sonde ultrasonique (11).

3. Un dispositif d'inspection des défauts par ultrasons (1) configuré pour inspecter une partie intérieure d'un matériau d'inspection en transmettant un signal ultrasonique d'une sonde ultrasonique (11) au matériau d'inspection, et en recevant le signal ultrasonique réfléchi par la partie intérieure du matériau d'inspection en tant que signal de réflexion par la sonde ultrasonique (11), le dispositif d'inspection des défauts par ultrasons (1) comprenant :

   une unité de réception (11, 16, 17, 18) configurée pour recevoir le signal de réflexion tout en changeant les positions du matériau d'inspection et de la sonde ultrasonique (11) ; et
   une unité d'extraction (19) configurée pour extraire, à partir du signal de réflexion reçu par l'unité de réception, un signal de défaut comme réflexion d'un défaut (F, Fd) dans le matériau d'inspection ;
   le dispositif (1) **caractérisé en ce qu'**il comprend en outre une unité de calcul de la pression acoustique prévue (19) configurée pour calculer une pression acoustique prévue en tant qu'intensité d'un signal de défaut calculé pour une forme de défaut virtuel comme prévu à partir de la directivité ultrasonique de la sonde ultrasonique (11) : et
   une unité d'estimation de la forme du défaut (19) configurée pour déterminer la présence/l'absence de directivité du défaut (F, Fd) sur la base d'une pression acoustique reçue obtenue à partir de l'intensité du signal de défaut extrait par l'unité d'extraction et pour estimer la forme du défaut sur la base de la pression acoustique reçue et d'une pression acoustique prévue d'une forme de défaut virtuel correspondant à la présence/l'absence de directivité déterminée du défaut.

4. Une installation de fabrication de matériaux en acier comprenant :

   une installation de fabrication configurée pour fabriquer un matériau en acier ; et
   le dispositif d'inspection des défauts par ultrasons (1) selon la revendication 3, configuré pour inspecter une partie intérieure du matériau en acier fabriqué par l'installation de fabrication.

5. Un procédé de fabrication pour des matériaux en acier, le procédé de fabrication comprenant :
   une étape de fabrication d'un matériau en acier ; et une étape d'inspection des défauts consistant à effectuer une inspection des défauts sur une partie intérieure du matériau en acier fabriqué lors de l'étape de fabrication à l'aide du procédé d'inspection des défauts par ultrasons selon la revendication 1 ou 2.

6. Un procédé de gestion de la qualité pour les matériaux en acier, le procédé de gestion de la qualité comprenant :

une étape d'inspection des défauts consistant à effectuer une inspection des défauts sur une partie intérieure d'un matériau en acier à l'aide du procédé d'inspection des défauts par ultrasons selon la revendication 1 ou 2 ; et une étape de gestion de la qualité consistant à gérer la qualité du matériau en acier sur la base d'un résultat d'inspection des défauts obtenu lors de l'étape d'inspection des défauts.

# FIG.1

| 15 | 16 | 17 | 20 |
|---|---|---|---|
| PULSER | RECEIVER | A/D CONVERTER | DISPLAY DEVICE |

18 RECORDING DEVICE

19 SIGNAL PROCESSING DEVICE

13

12

11

RB

14        14

# FIG.2

START

### I

RECEIVE REFLECTION SIGNAL ⟂S21

REFLECTION SIGNAL

STORE REFLECTION SIGNAL IN RECORDING DEVICE ⟂S22

### II

DETERMINE THRESHOLD ⟂S23

FLAW SIGNAL

### III

ACQUIRE FLAW INSPECTION IMAGE ⟂S13

DETERMINE FLAW TYPE ⟂S14

ESTIMATE FLAW SHAPE ⟂S15

INPUT FLAW INSPECTION CONDITIONS ⟂S11

CALCULATE EXPECTED SOUND PRESSURE ⟂S12

EXPECTED SOUND PRESSURE

### IV

DETERMINE ACCEPTANCE/ REJECTION AND/OR CUTTING AMOUNT ⟂S16

END

# FIG.3

# FIG.4

# FIG.5

# FIG.6

# FIG.7

# FIG.8

# FIG.9

# FIG.10

# FIG.11

# FIG.12

# FIG.13

# FIG.14

# FIG.15

# FIG.16

(a)

ROTATION ANGLE R

R1  R2  R3

RECEPTION TIME T

T1

T2

T3

I1

I2

I3

(b)

RECEIVED WAVEFORM
IN CASE OF ROTATION
ANGLE R=R1

SIGNAL STRENGTH

RECEPTION TIME T

RECEIVED WAVEFORM
IN CASE OF ROTATION
ANGLE R=R2

SIGNAL STRENGTH

RECEPTION TIME T     T1  T2  T3

RECEIVED WAVEFORM
IN CASE OF ROTATION
ANGLE R=R3

SIGNAL STRENGTH

RECEPTION TIME T

(c)

EP 3 922 988 B1

FIG.17

RECEIVED WAVEFORM IN CASE OF ROTATION ANGLE R=R1

RECEIVED WAVEFORM IN CASE OF ROTATION ANGLE R=R2

RECEIVED WAVEFORM IN CASE OF ROTATION ANGLE R=R3

SIGNAL STRENGTH

RECEPTION TIME T

ROTATION ANGLE R

RECEPTION TIME T

(a)

(b)

(c)

# FIG.18

# FIG.19

# FIG.20

ROTATION ANGLE R

RECEPTION TIME T

$I_{E2}$

1

$y_n'$

E2

0

$x_n$

xN

dx

**EP 3 922 988 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013088240 A
- JP 2015114127 A
- JP 2000241396 A
- JP 2015021738 A
- JP 58106454 A